# EUROPÄISCHE PATENTANMELDUNG

(11) **EP 3 617 004 A1**
(43) Veröffentlichungstag der Anmeldung: **04.03.2020**
(21) Anmeldenummer: 19182760.9
(22) Anmeldetag: 27.06.2019
(51) Int. Cl.: B60R 16/023, B60R 25/102, G07C 5/00

(54) **VERFAHREN ZUM BEREITSTELLEN VON DATEN EINES LASTZUGES**

(30) Priorität: 30.08.2018 DE 102018121164
(71) Anmelder: WABCO GmbH, 30453 Hannover (DE)
(72) Erfinder: RISSE, Rainer, 30982 Pattensen-Reden (DE); STENDER, Axel, 31787 Hameln (DE); VON DER BEEKE, Jan-Christoph, 38114 Braunschweig (DE); WITTE, Norbert, 31867 Lauenau (DE)
(74) Vertreter: Schwarzweller, Thomas

(57) **Zusammenfassung**

Die Erfindung betrifft ein Verfahren zum Bereitstellen von Daten eines Lastzuges (10), welcher wenigstens aus einem Zugfahrzeug (11) und einem Anhängefahrzeug (12) besteht, wobei Zugfahrzeug und Anhängefahrzeug über eine Datenschnittstelle (15) verbunden sind und elektronische Steuergeräte (13, 17) aufweisen, die über die Datenschnittstelle Daten übertragen oder bereitstellen können. Erfindungsgemäß sendet das Steuergerät (17) des Anhängefahrzeugs (12) eine Anforderung zur Übersendung oder Bereitstellung von Daten an das Steuergerät (13) des Zugfahrzeugs (11). Das Steuergerät (13) des Zugfahrzeugs sendet zumindest die angeforderten Daten oder einen Teil derselben an das Anhängefahrzeug (12) oder stellt die Daten dem Anhängefahrzeug zur Verfügung.

## Beschreibung

Die Erfindung betrifft ein Verfahren zum Bereitstellen von Daten eines Lastzuges, welcher wenigstens aus einem Zugfahrzeug und einem Anhängefahrzeug besteht, wobei Zugfahrzeug und Anhängefahrzeug über eine Datenschnittstelle verbunden sind und elektronische Steuergeräte aufweisen, die über die Datenschnittstelle Daten übertragen oder bereitstellen können. Daneben betrifft die Erfindung ein System zur Durchführung des Verfahrens und ein Steuergerät.

Flottenbetreiber möchten Zugriff nehmen auf Daten von Fahrzeugen oder laufend über die in den Fahrzeugen anfallenden Daten informiert werden. Zu diesem Zweck können die Fahrzeuge Telematikeinheiten aufweisen, mit denen in den Fahrzeugen anfallende Daten drahtlos an externe Empfänger der Flottenbetreiber übermittelt werden.

In einem Lastzug aus Zugfahrzeug und Anhängefahrzeug (oder mehreren) können entsprechend der Anzahl der Fahrzeuge mehrere Telematikeinheiten vorhanden sein. Im Zugfahrzeug werden zum Teil andere Daten gesammelt und per Telematik übermittelt als im Anhängefahrzeug. Die Hersteller von Zugfahrzeugen einerseits und Anhängefahrzeugen andererseits haben unterschiedliche Vorstellungen hinsichtlich der benötigten Daten, ebenso die Flottenbetreiber. Ein Flottenbetreiber, der zeitnah über die Daten von Zugfahrzeug und Anhängefahrzeug eines Lastzuges verfügen möchte, kann mit einer Telematikeinheit im Zugfahrzeug Daten des Anhängefahrzeugs und des Zugfahrzeugs an einen externen Empfänger übertragen lassen, siehe DE 10 2012 023 968 A1.

Anders liegt der Fall, wenn ein Flottenbetreiber in erster Linie an den im Anhängefahrzeug anfallenden Daten interessiert ist, zusätzlich aber auch Daten des Zugfahrzeugs erhalten möchte, entweder abgespeichert im Anhängefahrzeug oder drahtlos übermittelt.

Aufgabe der vorliegenden Erfindung ist die Schaffung eines Verfahrens, mit dem Daten des Zugfahrzeugs im Anhängefahrzeug bereitgestellt werden können.

Zur Lösung der Aufgabe weist das erfindungsgemäße Verfahren die Merkmale des Anspruchs 1 auf. Insbesondere ist vorgesehen, dass ein Steuergerät des Anhängefahrzeugs eine Anforderung zur Übersendung oder Bereitstellung von Daten an ein Steuergerät des Zugfahrzeugs sendet, und dass das Steuergerät des Zugfahrzeugs zumindest die angeforderten Daten oder einen Teil derselben an das Anhängefahrzeug sendet oder für das Anhängefahrzeug bereitstellt. Die Daten werden vorzugsweise an ein Steuergerät im Anhängefahrzeug übersandt oder diesem insbesondere auf einem Datenbus zur Verfügung gestellt.

In einem Steuergerät des Zugfahrzeugs, insbesondere in einem Bremsen-Steuergerät, werden Daten gespeichert, die zum Teil auch auf dem fahrzeuginternen Bussystem (vorzugsweise CAN-Bus) zur Verfügung gestellt werden, etwa Fahrgestellnummer, Fahrer-ID, Kraftstoffverbrauch und Motormoment, Achslast, insbesondere Achslast der Hinterachse (Trailer-Massen- und Schwerpunktabschätzung), Daten des elektronischen Bremssystems wie Eingriffe der elektronischen Stabilitätskontrolle und der Antiblockierregelung, Fehlerstatus des elektronischen Bremssystems, Servicestatus (Bremsbelagverschleiß, gemeinsame Planung des Services von Zugfahrzeug und Anhänger) usw. Diese Daten werden im Steuergerät in einem sogenannten Operating Data Recorder (ODR) als Roh-Messwerte oder als bereits aufgearbeitete Informationen gespeichert. Aus dem ODR können die Daten anderen Steuergeräten zur Verfügung gestellt werden.

Im Rahmen des erfindungsgemäßen Verfahrens ist insbesondere vorgesehen, dass das Steuergerät des Anhängefahrzeugs die im ODR gespeicherten Daten des Zugfahrzeugs anfordert und übermittelt bekommt.

Vorzugsweise sind Zugfahrzeug und Anhängefahrzeug mit einem elektronischen Bremssystem ausgerüstet und über eine ISO 11992-Datenschnittstelle oder eine andere standardisierte oder proprietäre Datenschnittstelle miteinander verbunden, siehe insbesondere ISO 11992-1:2003, ISO-11992-2:2014, ISO-11992-3:2003.

Nach einem weiteren Gedanken der Erfindung kann vorgesehen sein, dass Zugfahrzeug und Anhängefahrzeug unter Verwendung eines Protokolls gemäß ISO 11992-4:2014 Daten übertragen. Mit dem Protokoll können gezielt Anfragen zur Übermittlung von Daten durchgeführt werden. Vorzugsweise sind hierfür Zugfahrzeug und Anhängefahrzeug jeweils mit einem Diagnose-Server bzw. Diagnose-Client nach ISO 11992-4:2014 ausgestattet.

Alternativ unterstützen die elektronischen Bremssysteme von Zugfahrzeug und Anhängefahrzeug andere standardisierte oder auch proprietäre Botschaften, die über standardisierte Datenschnittstellen gesendet werden können. Auch die Nutzung nicht standardisierter Übertragungswege ist möglich, etwa eine Funkübertragung, eine separate Datenleitung zwischen Zugfahrzeug und Anhängefahrzeug oder eine sogenannte Powerline-Kommunikation (PLC).

Nach einem weiteren Gedanken der Erfindung kann vorgesehen sein, dass das Steuergerät des Zugfahrzeugs die Daten an das anfordernde Steuergerät des Anhängefahrzeugs übersendet oder diesem zur Verfügung stellt. Alternativ ist das anfordernde Steuergerät des Anhängefahrzeugs nicht das Steuergerät, welches die Daten erhält, speichert oder verarbeitet.

Nach einem weiteren Gedanken der Erfindung kann vorgesehen sein, dass die Daten mittels einer Telematikeinheit vom Anhängefahrzeug drahtlos an einen externen Empfänger übersandt werden. Die Telematikeinheit ist eingerichtet zum Empfang oder zum Abholen der Daten und zum Versenden der Daten an einen externen Empfänger. Die Telematikeinheit kann über ein Datenbussystem mit dem Steuergerät im Anhängefahrzeug verbunden sein.

Nach einem weiteren Gedanken der Erfindung kann vorgesehen sein, dass die Daten von einem Steuergerät des Anhängefahrzeugs an die Telematikeinheit übermittelt oder der Telematikeinheit bereitgestellt werden. Beispielsweise werden die Daten vom Steuergerät empfangen und an die Telematikeinheit weitergeleitet oder der Telematikeinheit zur Verfügung gestellt.

Nach einem weiteren Gedanken der Erfindung kann vorgesehen sein, dass das die Daten anfordernde Steuergerät ein Bremsen-Steuergerät des Anhängefahrzeugs ist. Auch kann das anfordernde Steuergerät in das Bremsen-Steuergerät integriert sein oder mit diesem eine Einheit bilden. Im Bremsen-Steuergerät werden Daten des Anhängefahrzeugs gespeichert, insbesondere im Operating Data Recorder. Diese Daten können mit den Daten des Zugfahrzeugs insbesondere im Steuergerät zusammengeführt werden.

Vorzugsweise ist vorgesehen, dass die zusammengeführten Daten des Zugfahrzeugs und des Anhängefahrzeugs zeitlich korreliert und/oder mit einer Zeitangabe versehen sind.

Ein erfindungsgemäßes System innerhalb eines Anhängefahrzeugs und zur Durchführung des Verfahrens nach einem der Ansprüche 1 bis 6 weist die Merkmale des Anspruchs 7 auf. Vorgesehen sind ein Steuergerät und eine Schnittstelle zur Übertragung von Daten zwischen dem Anhängefahrzeug und einem Zugfahrzeug. Das Steuergerät ist eingerichtet für die Sendung einer Anforderung an das Zugfahrzeug auf die Übersendung von Daten an das Anhängefahrzeug oder die Bereitstellung von Daten für das Anhängefahrzeug. Beispielsweise weist das Steuergerät eine hierfür geeignete Software und passende Schnittstellen auf.

Nach einem weiteren Gedanken der Erfindung kann das Anhängefahrzeug eine Diagnoseschnittstelle gemäß ISO 11992-4:2014 aufweisen, welche mit dem Steuergerät verbunden ist oder in das Steuergerät integriert ist. Über die Diagnoseschnittstelle ist eine standardisierte Anforderung und Annahme von Daten möglich.

Nach einem weiteren Gedanken der Erfindung kann eine Telematikeinheit zum Übersenden von Daten an einen externen Empfänger vorgesehen sein, wobei die Telematikeinheit mit dem Steuergerät über eine Datenschnittstelle verbunden, an einen gemeinsamen Datenbus angeschlossen oder in das Steuergerät integriert ist.

Ein erfindungsgemäßes Steuergerät zur Verwendung in einem System nach einem der Ansprüche 7 bis 9 weist die Merkmale des Anspruchs 10 auf und ist insbesondere eingerichtet für die Sendung einer Anforderung über eine Schnittstelle zum Zugfahrzeug auf Übersendung von Daten an das Anhängefahrzeug oder zur Bereitstellung der Daten.

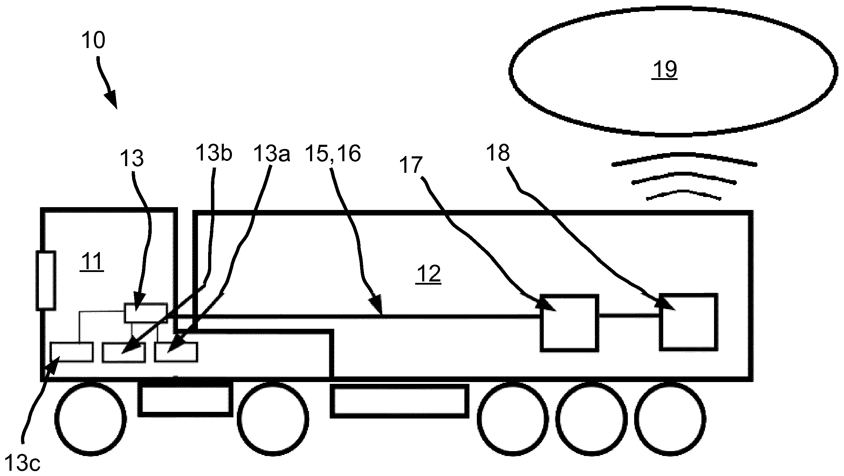

Weitere Merkmale der Erfindung ergeben sich aus der Beschreibung im Übrigen und aus den Ansprüchen. Vorteilhafte Ausführungsbeispiele der Erfindung werden nachfolgend anhand der einzigen Figur erläutert.

Ein Lastzug 10 besteht hier aus einem Zugfahrzeug 11 (Motorwagen) und einem Anhängefahrzeug 12 (Auflieger). Sowohl das Zugfahrzeug 11 als auch das Anhängefahrzeug 12 weisen ein elektronisches Bremssystem auf.

Elektronische Steuergeräte 13, 13a, 13b, 13c des Zugfahrzeugs 11 sind an einen Datenbus 14 (insbesondere CAN-Bus) angeschlossen und über eine Schnittstelle 15 gemäß ISO 11992 mit einem Datenbus 16 (insbesondere CAN-Bus) des Anhängefahrzeugs 12 verbunden. An diesen Datenbus 16 sind ein Bremsen-Steuergerät 17 und eine Telematikeinheit 18 im Anhängefahrzeug 12 angeschlossen.

Die Telematikeinheit 18 sammelt im Bremsen-Steuergerät 17 zur Verfügung stehende Daten und übersendet diese drahtlos, also beispielsweise per Funk, GSM, UMTS (3G), LTE (4G), 5G usw., an einen externen Empfänger. Letzterer ist beispielsweise ein Telematikportal des Flottenbetreibers oder eine Daten-Cloud.

Die im Bremsen-Steuergerät 17 zur Verfügung stehenden Daten stammen im Normalfall vom Anhängefahrzeug selbst. Im Anhängefahrzeug 12 vorhandene Sensoren, etwa für die Erfassung von Fahrzeug-ID, Geschwindigkeit, Beschleunigung, Reifendruck, Bremsenzustand, Temperatur, Position usw. stellen ihre Daten dem Steuergerät 17 zur Verfügung, sind unmittelbar an das Steuergerät 17 angeschlossen oder in dieses integriert. Für den für das Anhängefahrzeug 12 verantwortlichen Flottenbetreiber, welcher vom Flottenbetreiber des Zugfahrzeugs unabhängig sein kann, sind auch Daten des Zugfahrzeugs 11 von Interesse. Diese stehen im Normalfall im Bremsen-Steuergerät 13 des Zugfahrzeugs 11 zur Verfügung und werden nicht automatisch an das Anhängefahrzeug 12 übermittelt.

Das Anhängefahrzeug 12 fordert die interessierenden Daten des Zugfahrzeugs 11 an. Konkret übersendet das Bremsen-Steuergerät 17 über die Schnittstelle 15 eine Anforderung auf Übersendung von Daten an das Bremsen-Steuergerät 13 des Zugfahrzeugs 11. Hierzu wird das Datenprotokoll gemäß ISO 11992-4 verwendet. Entsprechend weist das Bremsen-Steuergerät 13 des Zugfahrzeugs 11 einen Diagnose-Server gemäß ISO 11992-4 auf und das Bremsen-Steuergerät 17 des Anhängefahrzeugs 12 einen Diagnose-Client.

Nach Erhalt der entsprechenden Anfrage des Bremsen-Steuergeräts 17 übersendet das Bremsen-Steuergerät 13 des Zugfahrzeugs 11 die gesammelten Daten oder speziell ausgewählte Daten an das Steuergerät 17. Schließlich überträgt die Telematikeinheit 18 die Daten an das externe Telematikportal 19.

Anstelle der beschriebenen standardisierten Schnittstellen und Übertragungswege zwischen Anhängefahrzeug 12 und Zugfahrzeug 11 können auch andere standardisierte oder proprietäre Verfahren zum Einsatz kommen bzw. verwendet werden, etwa eine Datenübertragung durch Aufmodulation von Signalen auf eine elektrische Leitung, wie beim sogenannten Power-Line-Carrier (PLC). Wichtig sind das Vorhandensein von Daten im Zugfahrzeug 11, die Anforderung der Daten durch das Anhängefahrzeug 12 und die anschließende Übersendung der Daten vom Zugfahrzeug zum Anhängefahrzeug.

### Bezugszeichenliste

- 10: Lastzug
- 11: Zugfahrzeug
- 12: Anhängefahrzeug
- 13: Bremsen-Steuergerät des Zugfahrzeugs
- 13a: Steuergerät des Zugfahrzeugs
- 13b: Steuergerät des Zugfahrzeugs
- 13c: Steuergerät des Zugfahrzeugs
- 14: Datenbus Zugfahrzeug
- 15: Schnittstelle ISO 11992
- 16: Datenbus Anhängefahrzeug
- 17: Bremsen-Steuergerät des Anhängefahrzeugs
- 18: Telematikeinheit
- 19: Telematikportal

## Patentansprüche

1. Verfahren zum Bereitstellen von Daten eines Lastzuges (10), welcher wenigstens aus einem Zugfahrzeug (11) und einem Anhängefahrzeug (12) besteht, wobei Zugfahrzeug (11) und Anhängefahrzeug (12) über eine Datenschnittstelle (15) verbunden sind und elektronische Steuergeräte (13, 17) aufweisen, die über die Datenschnittstelle (15) Daten übertragen oder bereitstellen können,
**dadurch gekennzeichnet, dass** das Steuergerät (17) des Anhängefahrzeugs (12) eine Anforderung zur Übersendung oder Bereitstellung von Daten an das Steuergerät (13) des Zugfahrzeugs (11) sendet, und dass das Steuergerät (13) des Zugfahrzeugs (11) zumindest die angeforderten Daten oder einen Teil derselben an das Anhängefahrzeug (12) sendet oder diesem zur Verfügung stellt.

2. Verfahren nach Anspruch 1, **dadurch gekennzeichnet, dass** Zugfahrzeug (11) und Anhängefahrzeug (12) unter Verwendung eines Protokolls gemäß ISO 11992-4:2014 Daten übertragen.

3. Verfahren nach Anspruch 1 oder 2, **dadurch gekennzeichnet, dass** das Steuergerät (13) des Zugfahrzeugs (11) die Daten an das anfordernde Steuergerät (17) des Anhängefahrzeugs (12) übersendet oder diesem zur Verfügung stellt.

4. Verfahren nach einem der Ansprüche 1 bis 3, **dadurch gekennzeichnet, dass** die Daten mittels einer Telematikeinheit (18) vom Anhängefahrzeug (12) drahtlos an einen externen Empfänger (19) übersandt werden.

5. Verfahren nach Anspruch 4, **dadurch gekennzeichnet, dass** die Daten von einem Steuergerät (17) des Anhängefahrzeugs (12) an die Telematikeinheit (18) übermittelt oder der Telematikeinheit (18) bereitgestellt werden.

6. Verfahren nach einem der Ansprüche 1 bis 5, **dadurch gekennzeichnet, dass** das die Daten anfordernde Steuergerät (17) ein Bremsen-Steuergerät des Anhängefahrzeugs (12) ist.

7. System innerhalb eines Anhängefahrzeugs und zur Durchführung des Verfahrens nach einem der Ansprüche 1 bis 6, mit einem Steuergerät (17) und einer Schnittstelle (15) zur Übertragung von Daten zwischen dem Anhängefahrzeug (12) und einem Zugfahrzeug (11),
**dadurch gekennzeichnet, dass** das Steuergerät (17) eingerichtet ist für die Sendung einer Anforderung an das Zugfahrzeug (11) auf die Übersendung von Daten an das Anhängefahrzeug (12) oder die Bereitstellung von Daten für das Anhängefahrzeug (12).

8. System nach Anspruch 7, **dadurch gekennzeichnet, dass** das Anhängefahrzeug (12) eine Diagnoseschnittstelle oder einen Client gemäß ISO 11992-4:2014 aufweist, welcher mit dem Steuergerät (17) verbunden ist oder in das Steuergerät (17) integriert ist.

9. System nach Anspruch 7 oder 8, **gekennzeichnet durch** eine Telematikeinheit (18) zum Übersenden von Daten an einen externen Empfänger (19), wobei die Telematikeinheit (18) mit dem Steuergerät (17) über eine Datenschnittstelle verbunden, an einen gemeinsamen Datenbus (16) angeschlossen oder in das Steuergerät (17) integriert ist.

10. Steuergerät (17) zur Verwendung in einem System nach einem der Ansprüche 7 bis 9, eingerichtet für die Sendung einer Anforderung über eine Schnittstelle (15) zum Zugfahrzeug (11) auf Übersendung von Daten an das Anhängefahrzeug (12) oder zur Bereitstellung der Daten.
